# EUROPEAN PATENT APPLICATION

(11) **EP 4 474 424 A1**
(43) Date of publication of application: **11.12.2024**
(21) Application number: 23749644.3
(22) Date of filing: 26.01.2023
(51) Int. Cl.: C08L 63/00, C08G 59/18, C08K 3/013, C08K 5/057, C08K 5/098, C08K 5/56, C08L 33/08, C08L 71/00, C08L 101/10

(54) **TWO-COMPONENT THERMALLY CONDUCTIVE RESIN COMPOSITION AND CURED PRODUCT**

(30) Priority: 01.02.2022 JP 2022014358
(71) Applicant: ThreeBond Co., Ltd., Tokyo 192-0398 (JP)
(72) Inventor: HANOCHI, Haruka, Hachioji-shi, Tokyo 192-0398 (JP); KOSAKA, Takahito, Hachioji-shi, Tokyo 192-0398 (JP); WATANABE, Yosuke, Hachioji-shi, Tokyo 192-0398 (JP)
(74) Representative: Haseltine Lake Kempner LLP
(86) International application number: PCT/JP2023/002407
(87) International publication number: WO 2023/149328

(57) **Abstract**

Provided is a two-part thermally conductive resin composition that can be cured at normal temperature and of which a cured product has a sufficient resin elongation percentage. A two-part thermally conductive resin composition comprising a component (A) to a component (F):
component (A): an epoxy resin (excluding epoxy resins having a (meth)acrylic-based polymer skeleton);
component (B): a metal catalyst;
component (C): an acrylic-based polymer and/or a polyether polyol (excluding component (D));
component (D): a crosslinkable silyl-containing organic polymer;
component (E): an epoxy curing agent; and
component (F): a heat dissipating filler.

## Description

### TECHNICAL FIELD

The present invention relates to a two-part thermally conductive resin composition that is cured at normal temperature (25°C) and of which a cured product has flexibility.

### BACKGROUND ART

Thus far, as a two-part thermally conductive resin composition that can be cured at normal temperature, one using an epoxy resin has been known (JP 2015-21118 A). However, since not only filler for imparting thermal conductivity but also an epoxy resin, which is a base resin, is hard and is difficult to elongate, the epoxy resin-based two-part thermally conductive resin composition has been difficult to use for parts where flexibility and resin elongation are required. In this respect, as a technique for improving flexibility and resin elongation while allowing normal temperature curing and maintaining characteristics of an epoxy resin, a technique of mixing an epoxy resin and modified silicone is known (WO 2014/017218 A).

### SUMMARY OF INVENTION

However, with regard to a material in which a large amount of filler is put like a two-part thermally conductive resin composition, since the amount of curable resin components is reduced relative to the entire composition, the cured product has failed to exhibit sufficient flexibility and a sufficient resin elongation percentage.

As a result of extensive studies to achieve the above object, the present inventors have found a technique regarding a two-part thermally conductive resin composition that can be cured at normal temperature and of which a cured product has a sufficient resin elongation percentage, and have completed the present invention.

The gist of the present invention will now be described.
[1] A two-part thermally conductive resin composition containing a component (A) to a component (F) below:
   component (A): an epoxy resin (excluding epoxy resins having a (meth)acrylic-based polymer skeleton);
   component (B): a metal catalyst;
   component (C): an acrylic-based polymer and/or a polyether polyol (excluding component (D));
   component (D): a crosslinkable silyl-containing organic polymer (a crosslinkable silyl group-containing organic polymer);
   component (E): an epoxy curing agent; and
   component (F): a heat dissipating filler.
[2] The two-part thermally conductive resin composition according to [1], composed of an agent A and an agent B, wherein the agent A is a composition containing the component (A) and the component (B), the agent B is a composition containing the component (D) and the component (E), and other components are contained in at least one of the agent A and the agent B.
[3] The two-part thermally conductive resin composition according to [1] or [2], wherein the component (C) is in a liquid form.
[4] The two-part thermally conductive resin composition according to any one of [1] to [3], wherein the component (C) is contained in an amount of 20 to 250 parts by mass relative to 100 parts by mass of the component (A).
[5] The two-part thermally conductive resin composition according to any one of [1] to [4], further containing a flame retardant as a component (G).
[6] The two-part thermally conductive resin composition according to [5], wherein the component (G) is aluminum hydroxide.
[7] The two-part thermally conductive resin composition according to [5] or [6], composed of an agent A and an agent B, wherein the agent A is a composition containing the component (A) to the component (C), the component (F), and the component (G), and the agent B is a composition containing the component (D) to the component (G).
[8] A cured product obtained by curing the two-part thermally conductive resin composition according to any one of [1] to [7] .
[9] The cured product according to [8], wherein a thermal conductivity is 1.5 W/(m·k) or more, and flame retardancy satisfies UL94 V-0.
[10] The cured product according to [8] or [9], wherein a resin elongation percentage is 15% or more.

### DESCRIPTION OF EMBODIMENTS

Details of the present invention will now be described. In the present specification, "X to Y" is used to have a meaning of including the numerical values (X and Y) written before and after the "X to Y" as the lower limit value and the upper limit value, and means "X or more and Y or less". In the present specification, the term (meth)acrylic means both acrylic and methacrylic.

An aspect of the present invention is a two-part thermally conductive resin composition containing a component (A) to a component (F) below:
component (A): an epoxy resin (excluding epoxy resins having a (meth)acrylic-based polymer skeleton);
component (B): a metal catalyst;
component (C): an acrylic-based polymer and/or a polyether polyol (excluding component (D));
component (D): a crosslinkable silyl-containing organic polymer (a crosslinkable silyl group-containing organic polymer);
component (E): an epoxy curing agent; and
component (F): a heat dissipating filler.

The two-part thermally conductive resin composition according to the present invention can be cured at normal temperature, and the cured product can exhibit excellent thermal conductivity and an excellent resin elongation percentage.

Another aspect of the present invention is a cured product obtained by curing the two-part thermally conductive resin composition according to an aspect of the present invention. The cured product according to the present invention can exhibit excellent thermal conductivity and an excellent resin elongation percentage. In the present specification, the cured product according to the present invention is also simply referred to as a "cured product".

The component (A) used in the present invention is an epoxy resin excluding those having a (meth)acrylic-based polymer skeleton. The component (A) may be a solid or a liquid as long as it is a compound having one or more epoxy groups. The component (A) is not particularly limited, but preferably has two or more epoxy groups in that the curability at normal temperature and the resin strength are excellent. Further, the component (A) is preferably a liquid at 25°C in terms of workability of the two-part thermally conductive resin composition. Specific examples of the component (A) include: bisphenol-type epoxy resins; alkylene glycol-type epoxy resins such as 1,2-butanediol diglycidyl ether, 1,3-butanediol diglycidyl ether, 1,4-butanediol diglycidyl ether, (poly)ethylene glycol diglycidyl ether, propylene glycol diglycidyl ether, 2,3-butanediol diglycidyl ether, 1,5-pentanediol diglycidyl ether, 1,6-hexanediol diglycidyl ether, neopentyl glycol diglycidyl ether, and 1,4-cyclohexanedimethanol diglycidyl ether; novolac-type epoxy resins such as phenol novolac-type epoxy resins and cresol novolac-type epoxy resins; glycidylamine compounds such as N,N-diglycidyl-4-glycidyloxyaniline, 4,4'-methylenebis(N,N-diglycidylaniline), tetraglycidyldiaminodiphenylmethane, and tetraglycidyl-m-xylylenediamine; naphthalene-type epoxy resins having four glycidyl groups; and the like. For these component (A)s, one kind may be used singly, or two or more kinds may be used in combination. The component (A) preferably contains bisphenol-type epoxy in that the resin strength is excellent.

The bisphenol-type epoxy resin is not particularly limited as long as it is an epoxy resin having a bisphenol skeleton. Examples of the bisphenol-type epoxy resin include bisphenol A-type epoxy resins, bisphenol F-type epoxy resins, a bisphenol S type, bisphenol AD-type epoxy resins, hydrogenated bisphenol A-type epoxy resins, hydrogenated bisphenol F-type epoxy resins, urethane-modified bisphenol-type epoxy resins, rubber-modified bisphenol-type epoxy resins, polyoxyalkylene-modified bisphenol-type epoxy resins, and the like. For the bisphenol-type epoxy resin, one kind of may be used singly, or two or more kinds may be used in combination. The bisphenol-type epoxy resin is preferably a combination of a bisphenol A-type epoxy resin and a polyoxyalkylene-modified bisphenol-type epoxy resin in that the resin strength and the resin elongation percentage are excellent.

Commercially available products of the bisphenol-type epoxy resin are not particularly limited, and examples include jER (registered trademark) 828, 1001, 801, 806, 807, 152, 604, 630, 871, YX8000, YX8034, and YX4000 (all manufactured by Mitsubishi Chemical Corporation), EPICLON 830, 850, 830LVP, 850CRP, 835LV, HP4032D, 703, 720, 726, and 820 (all manufactured by DIC Corporation), ADEKA RESIN (registered trademark) EP4100, EP4000, EP4080, EP4085, EP4088, EPU6, EPU7N, EPR4023, EPR1309, and EP4920 (all manufactured by ADEKA Corporation), TEPIC (registered trademark) (manufactured by Nissan Chemical Industries, Ltd.), KF-101, KF-1001, KF-105, X-22-163B, and X-22-9002 (all manufactured by Shin-Etsu Chemical Co., Ltd.), DENACOL (registered trademark) EX411, 314, 201, 212, and 252 (all manufactured by Nagase ChemteX Corporation), DER-331, 332, 334, 431, and 542 (all manufactured by The Dow Chemical Company), YH-434 and YH-434L (both manufactured by NIPPON STEEL Chemical & Material Co., Ltd.), and the like. For these commercially available products, one kind may be used singly, or two or more kinds may be used in combination.

The content amount of the bisphenol-type epoxy resin is preferably 10 to 100 mass%, more preferably 20 to 95 mass%, and most preferably 30 to 90 mass% relative to the entire component (A). Within the above range, a two-part thermally conductive resin composition excellent in resin strength of the cured product can be obtained. In the case where a bisphenol A-type epoxy resin and a polyoxyalkylene-modified bisphenol-type epoxy resin are used in combination, the mass ratio between them (bisphenol A-type epoxy resin:polyoxyalkylene-modified bisphenol-type epoxy resin) is preferably 10:1 to 1:10, more preferably 8:1 to 1:8, and most preferably 5:1 to 1:5.

Further, the component (A) preferably contains a reactive diluent having one or more epoxy groups in that workability is excellent. In the present specification, the reactive diluent having one or more epoxy groups is included in the epoxy resin. The reactive diluent having one or more epoxy groups is not particularly limited as long as the viscosity can be adjusted by adding the reactive diluent. Examples of the reactive diluent having one or more epoxy groups include 1,4-butanediol diglycidyl ether, n-butyl glycidyl ether, allyl glycidyl ether, 2-ethylhexyl glycidyl ether, styrene oxide, phenyl glycidyl ether, cresyl glycidyl ether, p-sec-butylphenyl glycidyl ether, glycidyl methacrylate, t-butylphenyl glycidyl ether, diglycidyl ether, (poly)ethylene glycol glycidyl ether, (poly)ethylene glycol diglycidyl ether, butanediol glycidyl ether, trimethylolpropane triglycidyl ether, 1,6-hexanediol diglycidyl ether, and the like. For the reactive diluent having one or more epoxy groups, one kind may be used singly, or two or more kinds may be used in combination.

The reactive diluent having one or more epoxy groups is contained in an amount of preferably 1 to 50 mass%, more preferably 5 to 40 mass%, and most preferably 10 to 30 mass% relative to the entire component (A). By the reactive diluent having one or more epoxy groups being contained in an amount of 1 mass% or more, workability at the time of filling, etc. is excellent. By the reactive diluent having one or more epoxy groups being contained in an amount of 50 mass% or less, a two-part thermally conductive resin composition excellent in resin strength of the cured product can be obtained.

Commercially available products of the reactive diluent having one or more epoxy groups are not particularly limited, and examples include ED-502, ED-502S, ED-509E, ED-509S, ED-529, ED-503, ED-503G, ED-506, ED-523T, and ED-505 (all manufactured by ADEKA Corporation), YED 111N, YED 111AN, YED 122, YED 188, YED 216M, and YED 216D (all manufactured by Mitsubishi Chemical Corporation), EPICLON (registered trademark) 855, and EPICLON (registered trademark) D-591 and D-595 (all manufactured by DIC Corporation), YD-115 and YD-115CA (both manufactured by NIPPON STEEL Chemical & Material Co., Ltd.), Epolight (registered trademark) 40E, 100E, 200E, 400E, 70P, 200P, and 400P (all manufactured by Kyoeisha Chemical Co., Ltd.), and the like. For these commercially available products, one kind may be used singly, or two or more kinds may be used in combination.

The component (B) used in the present invention is a metal catalyst. The component (B) is not particularly limited as long as it cures the component (D) described later. Specific examples of the component (B) include: tin catalysts such as dibutyltin dilaurate, dibutyltin oxide, dibutyltin diacetate, dibutyltin distearate, dibutyltin laurate oxide, dibutyltin diacetylacetonate, dibutyltin dioleylmalate, dibutyltin octoate, dioctyltin oxide, dioctyltin dilaurate, and a reaction product of a dioctyltin salt and a silicate; titanium catalysts such as titanium tetraisopropoxide, titanium diisopropoxy bis(acetylacetonate), tetraisopropyl titanate, tetraisopentyl titanate, and tetra-n-butoxy titanate; bismuth catalysts such as bismuth carboxylate, bismuth neodecanoate, bismuth subcarbonate, bismuth benzoate, bismuth abietate, bismuth neoabietate, and bismuth octylate; aluminum catalysts; zirconium catalysts; zinc catalyst; and the like. Among them, the metal catalyst is preferably one other than tin catalysts, namely a titanium catalyst, a bismuth catalyst, an aluminum catalyst, a zirconium catalyst, or a zinc catalyst, with consideration for environment, and is most preferably a bismuth catalyst because a cured product excellent in resin strength and resin elongation percentage can be obtained. For the metal catalyst, one kind may be used singly, or two or more kinds may be used in combination.

Commercially available products of the component (B) are not particularly limited. Examples of the tin catalyst include NEOSTANN (registered trademark) U-100, U-130, U-200, and U-303 (all manufactured by Nitto Kasei Co., Ltd.), and the like. Examples of the titanium catalyst include TA-8, TA-10, TA-21, TA-23, TA-30, TA-80, TC-100, TC-120, TC-401 (all manufactured by Matsumoto Fine Chemical Co., Ltd.), and the like. Examples of the bismuth catalyst include K-KAT 348, XK-628, and XK-640 (all manufactured by King Industries, Inc.), PUCAT (registered trademark) B7 and PUCAT (registered trademark) 25, bismuth neodecanoate (both manufactured by Nihon Kagaku Sangyo Co.,Ltd.), Borchi (registered trademark) Kat315, Kat320, Kat24 (all manufactured by Borchers), and the like. Examples of the zirconium catalyst include ZA-45 (manufactured by Matsumoto Fine Chemical Co., Ltd.), and the like. Examples of the aluminum catalyst include DX-9740 (Shin-Etsu Chemical Co., Ltd.), AMD, ASBD, AIPD, ALCH, ALCH-TR, Aluminum chelate M, Aluminum chelate D, and Aluminum chelate A (all manufactured by Kawaken Fine Chemicals Co.,Ltd.), and the like. Examples of the zinc catalyst include K-KAT 670 (manufactured by King Industries, Inc.), and the like.

In the two-part thermally conductive resin composition according to the present invention, the content amount of the component (B) is 0.1 to 50 parts by mass, preferably 0.5 to 30 parts by mass, and particularly preferably 1 to 20 parts by mass relative to 100 parts by mass of the component (D) described later. Within the above range, a two-part thermally conductive resin composition still more excellent in resin strength and resin elongation percentage of the cured product can be obtained.

The component (C) used in the present invention is a (meth)acrylic-based polymer and/or a polyether polyol excluding the component (D) described later. The component (C) may be a solid or a liquid, and is preferably a liquid at 25°C. The component (C) is not particularly limited, but is preferably a liquid in that workability of the two-part thermally conductive resin composition is excellent. The (meth)acrylic-based polymer includes a polymer of a (meth)acrylic monomer alone, and a copolymer of a plurality of (meth)acrylic monomers and a copolymer of a (meth)acrylic monomer and a resin other than (meth)acrylic, such as styrene. For the component (C), one kind may be used singly, or two or more kinds may be used in combination.

The component (C) may have a reactive functional group (excluding reactive functional groups contained in the component (A), the component (D), and the component (E)). Specific examples of the reactive functional group include a hydroxy group, a (meth)acrylic group, a carboxylic acid group, and an isocyanate, and the like. The component (C) is preferably one having no hydroxy group or functional group because a cured product excellent in resin elongation percentage can be obtained. A (meth)acrylic-based polymer having an epoxy group is treated as the component (C).

The weight average molecular weight of the component (C) is preferably 500 to 10000, and more preferably 1000 to 5000. When the weight average molecular weight of the component (C) is 500 or more, a cured product having an excellent resin elongation percentage can be obtained. When the weight average molecular weight of the component (C) is 10000 or less, a two-part thermally conductive resin composition having low viscosity and excellent workability can be obtained. Here, in the present specification, the weight average molecular weight refers to a weight average molecular weight on a polystyrene basis measured by gel permeation chromatography.

In the two-part thermally conductive resin composition according to the present invention, the content amount of the component (C) is preferably 20 to 250 parts by mass, more preferably 30 to 200 parts by mass, and most preferably 50 to 150 parts by mass relative to 100 parts by mass of the component (A). Within the above range, a two-part thermally conductive resin composition that has a good balance between resin strength and resin elongation percentage of the cured product can be obtained.

Examples of commercially available products of the component (C) include, but are not limited to, UP-1000, 1010, 1020, 1021, 1080, 1170, and 1500, UH-2020, 2041, and 2190, UC-3510, and UG-4010 of the ARUFON (registered trademark) series (all manufactured by Toagosei Co., Ltd.), P-1000, 2000, and 3000, BPX-33, 55, 1000, and 2000, G-700, 1500, and 3000B, and AM-302 and 502 of the ADEKA POLYETHER series (all manufactured by ADEKA Corporation), EXCENOL 230, 820, and 828 (all manufactured by AGC Inc.), and the like.

The component (D) used in the present invention is a crosslinkable silyl-containing organic polymer (a crosslinkable silyl group-containing organic polymer). The component (D) is not particularly limited as long as it is an organic polymer having a crosslinkable silyl group in the molecule. The component (D) preferably has two or more crosslinkable silyl groups and/or is preferably an organic polymer having a crosslinkable silyl group at a terminal in that the resin strength and the resin elongation percentage of the cured product are excellent. Examples of the crosslinkable silyl group include a dimethoxysilyl group, a trimethoxysilyl group, a diethoxysilyl group, and a triethoxysilyl group. The crosslinkable silyl group is preferably a dimethoxysilyl group and/or a trimethoxysilyl group in that curability is excellent. For the component (D), one kind may be used singly, or two or more kinds may be used in combination.

The organic polymer in the component (D) is not particularly limited, and examples include a (meth)acrylic polymer, a polyoxyalkylene polymer, an isobutylene polymer, and the like. The organic polymer in the component (D) is preferably a polyoxyalkylene polymer in that the resin elongation percentage of the cured product is excellent. For the organic polymer in the component (D), one kind may be used singly, or two or more kinds may be used in combination.

In the two-part thermally conductive resin composition according to the present invention, the content amount of the component (D) is preferably 20 to 300 parts by mass, more preferably 50 to 250 parts by mass, and most preferably 70 to 200 parts by mass relative to 100 parts by mass of the component (A). Within the above range, a two-part thermally conductive resin composition excellent in resin strength and resin elongation percentage of the cured product can be obtained.

Commercially available products of the component (D) are not particularly limited. Examples of the crosslinkable silyl-containing (meth)acrylic polymer include SA100S, SA310S, OR100S (all manufactured by Kaneka Corporation), and the like. Examples of the crosslinkable silyl-containing polyoxyalkylene polymer include SAT010, SAT115, SAT030, SAT030, SAT200, SAT350, SAT400, and SAX220, SAX510, SAX530, and SAX575 (trimethoxysilyl group-containing polyoxyalkylene polymers), SAX580, SAX710, SAX720, SAX725, SAX750, SAX770, S203, S303, S203H, S303H, S943S, S911S, MA440, MA447, MA451, MA903, MA903M, MA904, S943, MAX923, MAX951, SAX510, SAX520, SAX530, SAX580, and the like (all manufactured by Kaneka Corporation), ES-S2410, ES-S2420, ES-S3430, ES-S3610, and ES-S3630 (all manufactured by Asahi Glass Co., Ltd.), and the like. Examples of the crosslinkable silyl-containing isobutylene polymer include EP100S, EP103S, EP303S, EP505S, and the like (manufactured by Kaneka Corporation). For these commercially available products, one kind may be used singly, or two or more kinds may be used in combination.

The component (E) used in the present invention is an epoxy curing agent. The component (E) is not particularly limited as long as it can cure the component (A) at normal temperature. The component (E) is preferably in a liquid form at 25°C in terms of compatibility and curability of the resin, and is more preferably an amine compound in that curability is more excellent.

The amine compound is not particularly limited, and examples include aliphatic polyamines, alicyclic polyamines, aromatic polyamines, secondary amines, tertiary amines, polyamidoamines, polyamides, and the like. Examples of the aliphatic polyamine include ethylenediamine, diethylenetriamine, triethylenetetramine, hexamethylenediamine, and the like, and examples of the alicyclic polyamine include menthanediamine (MDA), isophoronediamine (IPDA), N-aminoethylpiperazine (N-AEP), diaminodicyclohexylmethane, norbornanediamine (NBDA), and the like. Examples of the aromatic polyamine include metaxylylenediamine (MXDA), meta-phenylenediamine, diaminodiphenylmethane, diaminodiphenylsulfone, diaminodiethyldiphenylmethane, and the like. Examples of the secondary amine or the tertiary amine include piperidine, pyridine, benzyldimethylamine, 2-(dimethylaminomethyl)phenol, triethylenediamine, dimethylcyclohexylamine, dimethylbenzylamine, dimethylhexylamine, dimethylaminophenol, dimethylamino-p-cresol, piperidine, 1,4-diazadicyclo[2.2.2]octane, 2,4,6-tris(dimethylaminomethyl)phenol, 1.8-diazabicyclo[5.4.0]undecene-1, and the like. The amine compound is preferably a secondary amine or a tertiary amine in that curability at normal temperature is excellent. For the amine compound, one kind may be used singly, or two or more kinds may be used in combination.

In the two-part thermally conductive resin composition according to the present invention, the content amount of the component (E) is preferably 1 to 50 parts by mass, more preferably 3 to 30 parts by mass, and most preferably 5 to 20 parts by mass relative to 100 parts by mass of the component (A). Within the above range, a two-part thermally conductive resin composition excellent in curability at normal temperature can be obtained.

Commercially available products of the component (E) are not particularly limited, and examples include jER CURE (registered trademark) ST11, ST12, ST14, ST15, LV11, 3080, YN100, 3019, RC14, 3549, FL11, FL11W, and SA1 (all manufactured by Mitsubishi Chemical Corporation), TOHMIDE (registered trademark) 410-N, 215-70X, 423, 437, and TXC-636-A, and FUJICURE (registered trademark) 4011, 4025, and 4030 (all manufactured by T&K TOKA Co., Ltd.), ADEKA HARDENER (registered trademark) EH-6019, EH-6024, EH-6028, EH-479A, EH-451N, EH-451K, EH-6007, EH-4602, EH-2300, EH-3427A, EH-4024W, and EH-235R-2 (all manufactured by ADEKA Corporation), Amicure PACM, and Ancamine 2049, 2167, 2264, K-54, 2089J, 2609, 1769, and 2422 (all manufactured by Air Products Japan K.K.), and the like. For these commercially available products, one kind may be used singly, or two or more kinds may be used in combination.

The component (F) used in the present invention is a heat dissipating filler. Examples of the component (F) include gold, silver, copper, alumina, zinc oxide, magnesium oxide, aluminum nitride, boron nitride, carbon, diamond, and the like because thermal conductivity is excellent. The component (F) is preferably alumina, aluminum nitride, or boron nitride in terms of thermal conductivity, insulating properties, and cost. The heat dissipating filler may be one surface-treated with a fatty acid, a resin acid, a fatty acid ester, a fatty acid metal salt, a silane coupling agent, or the like. For the component (F), one kind may be used singly, or two or more kinds may be used in combination.

The shape of the component (F) may be either a spherical shape or an indefinite shape. In the present specification, the spherical heat dissipating filler includes not only a perfect spherical shape but also shapes such as an almost spherical shape and a shape having an elliptical cross section. In the present specification, the indefinite-shaped heat dissipating filler refers to a heat dissipating filler having a corner other than a spherical shape, and includes a needle-like shape, a fibrous shape, a scale-like shape, a dendritic shape, a flat plate-like shape, a crushed shape, etc. For the shape of the component (F), one kind may be used singly, or two or more kinds may be used in combination.

The average particle size (50% average particle size) of the component (F) is not particularly limited. The average particle size of the component (F) is preferably 0.01 to 150 µm, more preferably 0.1 to 100 µm, and most preferably 0.5 to 70 µm in that a two-part thermally conductive resin composition having low viscosity before curing can be obtained. In the present specification, the average particle size means a particle size at 50% cumulation in a particle size distribution obtained by a laser diffraction/scattering method.

The component (F) is preferably a combination of two or more kinds of heat dissipating fillers having different average particle sizes because a two-part thermally conductive resin composition having low viscosity and excellent thermal conductivity after curing can be obtained. Specifically, the average particle size of a component (F1) that is a heat dissipating filler having a small average particle size is preferably 0.01 µm or more and less than 10 µm, and more preferably 0.1 to 7 µm. The average particle size of a component (F2) that is a heat dissipating filler having a large average particle size is preferably 10 to 150 µm, more preferably 15 to 100 µm, and most preferably 20 to 70 µm. The content amount of the component (F2) is 10 to 2000 parts by mass, preferably 50 to 1500 parts by mass, and particularly preferably 100 to 1200 parts by mass relative to 100 parts by mass of the component (F1). By the content amount of the component (F2) relative to 100 parts by mass of the component (F1) being within the above range, a two-part thermally conductive resin composition having lower viscosity and more excellent thermal conductivity after curing can be obtained; thus, this is preferable.

In the two-part thermally conductive resin composition according to the present invention, the content amount of the component (F) is preferably 100 to 5000 parts by mass, more preferably 300 to 4000 parts by mass, and most preferably 500 to 3000 parts by mass relative to 100 parts by mass of the component (A). Within the above range, a two-part thermally conductive resin composition excellent in thermal conductivity of the cured product can be obtained. Further, the content amount of the component (F) is preferably 55 to 95 mass%, more preferably 60 to 90 mass%, and most preferably 65 to 90 mass% relative to the entire two-part thermally conductive resin composition.

The two-part thermally conductive resin composition according to the present invention can contain a flame retardant as a component (G), in addition to the component (A) to the component (F). By the containing of a flame retardant by the two-part thermally conductive resin composition according to the present invention, flame retardancy can be imparted to the cured product in addition to thermal conductivity and a resin elongation percentage. The flame retardant is not particularly limited, and examples include: halogen-based flame retardants; red phosphorus-based flame retardants; hydroxides of metal compounds such as aluminum hydroxide, magnesium hydroxide, and calcium hydroxide; antimony compounds such as antimony oxide; nitrogen-containing compounds such as melamine, melamine cyanurate, melamine phosphate, and melamine resin; phosphoric acid ester compounds; ammonium polyphosphate compounds; metal compounds such as zinc stannate, zinc borate, zinc metaborate, zinc carbonate, magnesium carbonate, magnesium oxide, molybdenum oxide, tin oxide, iron oxide, and zirconium oxide; compounds containing polytetrafluoroethylene or an organosiloxane; various particulate inorganic compounds such as thermally expandable graphite, fumed silica, and zeolite; and the like. From the viewpoint of the flame retardancy and the resin strength of the cured product, the flame retardant is preferably a hydroxide of a metal compound, and most preferably aluminum hydroxide. The flame retardant may be one surface-treated with a fatty acid, a resin acid, a fatty acid ester, a fatty acid metal salt, a silane coupling agent, or the like. For the flame retardant, one kind may be used singly, or two or more kinds may be used in combination.

The average particle size of the component (G) is preferably 0.1 to 200 µm, more preferably 0.5 to 150 µm, and most preferably 1 to 100 µm from the viewpoint that a cured product having high flame retardancy can be obtained and dispersibility in the component (A) and the component (D) is excellent.

In the case where the two-part thermally conductive resin composition according to the present invention contains the component (G), the content amount of the component (G) is preferably 100 to 2000 parts by mass, more preferably 250 to 1500 parts by mass, and most preferably 500 to 1000 parts by mass relative to 100 parts by mass of the component (A). When the content amount is 100 parts by mass or more, flame retardancy can be imparted to the cured product of the two-part thermally conductive resin composition, and when the content amount is 2000 parts by mass or less, the resin elongation percentage of the cured product is not impaired. Further, the content amount of the component (G) is preferably 1 to 50 mass%, more preferably 5 to 35 mass%, and most preferably 10 to 25 mass% relative to the entire two-part thermally conductive resin composition.

In the case where the two-part thermally conductive resin composition according to the present invention contains the component (G), the mass ratio between the component (F) and the component (G) (component (F):component (G)) is preferably 100:1 to 100:100, more preferably 100:5 to 100:50, and most preferably 100:10 to 100:30. Within the above range, a two-part thermally conductive resin composition that has a good balance between thermal conductivity and flame retardancy of the cured product can be obtained.

In addition to the above components, various additives can be added as optional components to the two-part thermally conductive resin composition according to the present invention as necessary to the extent that the effect of the present invention is not impaired. Examples of the additive include a silane coupling agent, a plasticizer (excluding the component (C)), a filler (excluding the component (F) and the component (G)), a storage stabilizer, a tackifier, an organic or inorganic pigment, a rust inhibitor, an antifoaming agent, a dispersant, a surfactant, a viscoelastic preparation agent, a thickener, water, a solvent, etc.

Examples of the silane coupling agent that can be used in the present invention include: glycidyl group-containing silane coupling agents such as 3-glycidoxypropyltriethoxysilane, 3-glycidoxypropylmethyldimethoxysilane, 3-glycidoxypropyltrimethoxysilane, and 3-glycidoxypropylmethyldiethoxysilane; vinyl group-containing silane coupling agents such as vinyltris(β-methoxyethoxy)silane, vinyltriethoxysilane, and vinyltrimethoxysilane; (meth)acrylic group-containing silane coupling agents such as γ-methacryloxypropyltrimethoxysilane; amino group-containing silane coupling agents such as 3-aminopropyltrimethoxysilane, N-β-(aminoethyl)-γ-aminopropyltrimethoxysilane, γ-aminopropyltriethoxysilane, and N-phenyl-γ-aminopropyltrimethoxysilane; γ-mercaptopropyltrimethoxysilane and γ-chloropropyltrimethoxysilane, and oligomers thereof; and the like. The silane coupling agent is preferably a glycidyl group-containing silane coupling agent or an amino group-containing silane coupling agent in that adhesion is excellent. For the silane coupling agent, one kind may be used singly, or two or more kinds may be used in combination. The silane coupling agent is more preferably a combination of a glycidyl group-containing silane coupling agent and an amino group-containing silane coupling agent in that adhesion can be further improved.

Commercially available products of the silane coupling agent are not particularly limited, and examples include KBM-1003, KBE-1003, KBM-303, KBM-403, KBE-403, KBM-502, KBE-502, KBM-503, KBE-503, KBM-5103, KBM-1403, KBM-602, KBM-603, KBM-903, and KBE-903 (all manufactured by Shin-Etsu Chemical Co., Ltd.), Z-6610, Z-6044, Z-6825, Z-6033, and Z-6062 (all manufactured by Dow Toray Co., Ltd.), and the like.

Examples of the plasticizer (excluding the component (C)) that can be used in the present invention include, but are not limited to: aromatic polycarboxylic acid esters as polycarboxylic acid ester-based plasticizer, dioctyl phthalate (DOP), dibutyl phthalate (DBP), diheptyl phthalate (DHP), diisononyl phthalate (DINP), diisodecyl phthalate (DIDP), butyl benzyl phthalate (BBP) and the like as a phthalic acid ester-based plasticizer; trioctyl trimellitate (TOTM), triisodecyl trimellitate (TITM) and the like as a trimellitic acid ester-based plasticizer, tetraoctyl pyromellitate and the like as a pyromellitic acid ester-based plasticizer; di(2-ethylhexyl) adipate (DOA), isodecyl adipate (DIDA), di(2-ethylhexyl) sebacate (DOS), dibutyl sebacate (DBS), di(2-ethylhexyl) maleate (DOM), dibutyl fumarate (DBF), di(2-ethylhexyl) azelate (DOZ), di(2-ethylhexyl) epoxyhexahydrophthalate, trioctyl citrate, glycerol triacetate and the like as an aliphatic polycarboxylic acid ester-based plasticizer; trimethyl phosphate, tributyl phosphate, tri-(2-ethylhexyl) phosphate, tributoxyethyl phosphate, triphenyl phosphate, tricresyl phosphate, alkylaryl phosphate, triethyl phosphate, tri(chloroethyl) phosphate, tris(dichloropropyl) phosphate, tris(β-chloropropyl) phosphate, octyl diphenyl phosphate, tris(isopropylphenyl) phosphate, cresyl phenyl phosphate and the like as a phosphoric acid ester-based plasticizer; and the like. For the plasticizer, one kind may be used singly, or two or more kinds may be used in combination.

Examples of the filler (excluding the component (F) and the component (G)) that can be used in the present invention include glass, silica, talc, mica, silicone particles, calcium carbonate, carbon powder, kaolin clay, dry clay mineral, dry diatomaceous earth, butadiene rubber, butyl rubber, olefin rubber, styrene rubber, NBR, SBR, IR, EPR, etc. The filler preferably contains calcium carbonate in that sedimentation of the component (F) and the component (G) in the two-part thermally conductive resin composition according to the present invention can be suppressed. For the filler, one kind may be used singly, or two or more kinds may be used in combination.

Further, water can be added to the two-part thermally conductive resin composition according to the present invention. By adding water, curing reaction of the component (D) is accelerated, and curability at normal temperature can be improved. Examples of the water include pure water, ionexchanged water, distilled water, alkaline electrolyzed water (for example, strong alkaline electrolyzed water), and the like.

In the two-part thermally conductive resin composition according to the present invention, the content amount of the water is 0.05 to 30 parts by mass, preferably 0.1 to 20 parts by mass, and particularly preferably 0.3 to 10 parts by mass relative to 100 parts by mass of the component (D). Within the above range, a two-part thermally conductive resin composition still more excellent in curability at normal temperature can be obtained.

The two-part thermally conductive resin composition according to the present invention can be cured in a normal temperature environment by two-part mixing and with moisture. A cured product can be obtained by curing due to contact and reaction of the component (A) and the component (E) by two-part mixing, and curing due to condensation reaction of the component (D) with moisture in the air using the component (B) as a catalyst. Further, short-time curing of the two-part thermally conductive resin composition according to the present invention can be accelerated by heating. The heating conditions are not particularly limited, but the heating temperature is, for example, preferably 45 to 200°C, more preferably 50 to 170°C, and still more preferably 55 to 150°C. The cured product obtained by curing the two-part thermally conductive resin composition according to the present invention is also an aspect of the present invention. The curing by two-part mixing means that curing can be performed by mixing an agent A and an agent B described below at the time of use.

In an embodiment, the two-part thermally conductive resin composition according to the present invention is composed of an agent A and an agent B; the agent A is a composition containing at least the component (A) and the component (B), and the agent B is a composition containing at least the component (D) and the component (E). By thus dividing the components into separate liquids (agents), reaction during storage can be suppressed, and storage stability can be enhanced. Then, the composition can be quickly cured by mixing the two liquids at the time of use. The component (C) and the component (F), and the component (G) and optional components such as the silane coupling agent used as necessary may be contained in one or both of the agent A and the agent B. The water among the optional components is preferably contained only in the agent A. More preferably, the agent A is a composition containing the component (A) to the component (C), the component (F), and water, and the agent B is a composition containing the component (D) to the component (F), or the agent A is a composition containing the component (A) to the component (C), the component (F), and the component (G), and the agent B is a composition containing the component (D) to the component (G). Most preferably, the agent A is a composition containing the component (A) to the component (C), the component (F), the component (G), and water, and the agent B is a composition containing the component (D) to the component (G).

The content amounts of the components in the agent A are preferably 1 to 10 mass% of the component (A), 0.1 to 5 mass% of the component (B), 1 to 10 mass% of the component (C), 55 to 95 mass% of the component (F), 0 to 50 mass% of the component (G), and 0 to 1 mass% of water relative to the entire agent A, and are more preferably 3 to 8 mass% of the component (A), 0.5 to 3 mass% of the component (B), 3 to 8 mass% of the component (C), 65 to 90 mass% of the component (F), 0 to 25 mass% of the component (G), and 0.01 to 0.5 mass% of water relative to the entire agent A. Further, the content amounts of the components in the agent A are preferably 1 to 10 mass% of the component (A), 0.1 to 5 mass% of the component (B), 1 to 10 mass% of the component (C), 45 to 95 mass% of the component (F), 0 to 50 mass% of the component (G), and 0 to 1 mass% of water relative to the entire agent A, are more preferably 3 to 8 mass% of the component (A), 0.5 to 3 mass% of the component (B), 3 to 8 mass% of the component (C), 50 to 90 mass% of the component (F), 0 to 25 mass% of the component (G), and 0.01 to 0.5 mass% of water relative to the entire agent A, and are most preferably 3 to 8 mass% of the component (A), 0.5 to 3 mass% of the component (B), 3 to 8 mass% of the component (C), 55 to 80 mass% of the component (F), 10 to 25 mass% of the component (G), and 0.01 to 0.5 mass% of water relative to the entire agent A.

The content amounts of the components in the agent B are preferably 1 to 20 mass% of the component (D), 0.1 to 5 mass% of the component (E), 55 to 95 mass% of the component (F), and 0 to 50 mass% of the component (G) relative to the entire agent B, are more preferably 3 to 15 mass% of the component (D), 0.3 to 1 mass% of the component (E), 60 to 90 mass% of the component (F), and 0 to 25 mass% of the component (G) relative to the entire agent B, and are most preferably 5 to 15 mass% of the component (D), 0.3 to 1 mass% of the component (E), 60 to 80 mass% of the component (F), and 10 to 25 mass% of the component (G) relative to the entire agent B.

As the mixing ratio (mass) between the agent A and the agent B in the present invention, the agent B is preferably in the range of 0.1 to 1000 parts by mass and more preferably in the range of 10 to 700 parts by mass relative to 100 parts by mass of the agent A.

The two-part thermally conductive resin composition according to the present invention can be cured at normal temperature, and the thermal conductivity and the resin elongation percentage of the cured product thereof are excellent; thus, the two-part thermally conductive resin composition can be used in various uses such as: heat dissipation of electronic substrates; heat dissipation of electronic devices such as mobile phones and personal computers; heat dissipation of illumination such as LEDs; heat dissipation of optical pickup modules; heat dissipation of camera modules; heat dissipation of sensing devices; heat dissipation of power semiconductors; heat dissipation of HEV, FCV, and EV inverters; heat dissipation of HEV, FCV, and EV converters; heat dissipation of battery packs, and HEV, FCV, and EV ECU components; and heat dissipation of automotive batteries.

In an embodiment, in the cured product according to the present invention, the thermal conductivity is 1.5 W/(m·k) or more, and flame retardancy satisfies the UL94 V-0 standard. The upper limit value of the thermal conductivity is not particularly limited, but is, for example, 2.5 W/(m·k) or less. The thermal conductivity can be measured by a method described in Examples. The flame retardancy can be evaluated by a test method described in Examples.

In an embodiment, the resin elongation percentage of the cured product according to the present invention is 15% or more. The upper limit value of the resin elongation percentage is not particularly limited, but is, for example, 60% or less. The resin elongation percentage can be measured by a method described in Examples.

### EXAMPLES

Next, the present invention is described in more detail by showing Examples; however, the present invention is not limited to these Examples. Unless otherwise specified, the test was performed in an environment of 25°C and 55%RH.

### [Examples 1 to 6 and Comparative Examples 1 to 3]

The following components were prepared in order to prepare a two-part thermally conductive resin composition. Hereinafter, the two-part thermally conductive resin composition is also simply referred to as a composition.

The component (A): epoxy resins (excluding epoxy resins having a (meth)acrylic-based polymer skeleton)
·jER (registered trademark) 828 (a bisphenol A-type epoxy resin, manufactured by Mitsubishi Chemical Corporation)
·ADEKA RESIN (registered trademark) EP-4000 (a polyoxyalkylene-modified bisphenol A-type epoxy resin, manufactured by ADEKA Corporation)
·Epolight (registered trademark) 400E (polyethylene glycol diglycidyl ether, manufactured by Kyoeisha Chemical Co., Ltd.)

The component (B): a metal catalyst
·K-KAT XK-640 (bismuth carboxylate, manufactured by King Industries, Inc.)

The component (C): a (meth)acrylic-based polymer and/or a polyether polyol
·ARUFON (registered trademark) UP-1000 (a non-functional acrylic polymer, weight average molecular weight: 3000, manufactured by Toagosei Co., Ltd.)
·ARUFON (registered trademark) UP-1021 (a non-functional acrylic polymer, weight average molecular weight: 1600, manufactured by Toagosei Co., Ltd.)
·ARUFON (registered trademark) UH-2041 (a hydroxy group-containing acrylic polymer, weight average molecular weight: 2500, manufactured by Toagosei Co., Ltd.)
·ARUFON (registered trademark) UG-4010 (an epoxy group-containing acrylic polymer, weight average molecular weight: 2900, manufactured by Toagosei Co., Ltd.)
·ADEKA POLYETHER P-3000 (a polyether polyol, weight average molecular weight: 3000, manufactured by ADEKA Corporation)

The component (D): a crosslinkable silyl-containing organic polymer
·SAX575 (a trimethoxysilyl group-containing polyoxyalkylene polymer, manufactured by Kaneka Corporation)

The component (E): an epoxy curing agent
·Ancamine K-54 (2,4,6-tris(dimethylaminomethyl)phenol, manufactured by Air Products Japan K.K.)

The component (F): heat dissipating fillers
·AX35-125 (alumina, average particle size: 35 µm, manufactured by NIPPON STEEL Chemical & Material Co., Ltd.)
·AX3-32 (alumina, average particle size: 3 µm, manufactured by NIPPON STEEL Chemical & Material Co., Ltd.)

The component (G): a flame retardant
·BX043 (aluminum hydroxide, average particle size: 3 µm, manufactured by Nippon Light Metal Co., Ltd.)

Optional components
·KBM-403 (3-glycidoxypropyltrimethoxysilane, a silane coupling agent, manufactured by Shin-Etsu Chemical Co., Ltd.)
·KBM-903 (3-aminopropyltrimethoxysilane, a silane coupling agent, manufactured by Shin-Etsu Chemical Co., Ltd.)
·DOS (di(2-ethylhexyl) sebacate, a plasticizer, manufactured by Itoh Oil Chemicals Co.,Ltd.)
·Kalfain 500 (calcium carbonate, a filler, manufactured by Maruo Calcium Co.,Ltd.)
·TB6658 (strong alkaline electrolyzed water, pH: 12.7, manufactured by ThreeBond Co.,Ltd.)

### <Preparation of the agent A>

The component (A) to the component (C), the component (F), the component (G), and the optional components were mixed with a mixer at 25°C for 60 minutes at the ratio of Table 1 below, and the agent A was produced. In Table 1, the numerical value of each component indicates parts by mass.

### <Preparation of the agent B>

The component (D) to the component (G), and the optional components were mixed with a mixer at 25°C for 60 minutes at the ratio of Table 1 below, and the agent B was produced.

**[Table 1]**

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| | component (A) | jER828 | 65 | 65 | 65 | 65 | 65 | 65 | 65 | 65 | 65 |
| | | EP-4000 | 15 | 15 | 15 | 15 | 15 | 15 | 15 | 15 | 15 |
| | | 400E | 20 | 20 | 20 | 20 | 20 | 20 | 20 | 20 | 20 |
| | component (B) | K-KAT XK-640 | 23 | 23 | 23 | 23 | 23 | 23 | | 23 | 23 |
| | component (C) | UP-1000 | 100 | 100 | | | | | 100 | | |
| | | UP-1021 | | | 100 | | | | | | |
| | | UH-2041 | | | | 100 | | | | | |
| | | UG-4010 | | | | | 100 | | | | |
| agentA | | ADEKA POLYETHE R P-3000 | | | | | | 100 | | | |
| | component (F) | AW35-125 | 1200 | 1200 | 1200 | 1200 | 1200 | 1200 | 1200 | 1200 | 1200 |
| | | AX3-32 | 150 | 150 | 150 | 150 | 150 | 150 | 150 | 150 | 150 |
| | component (G) | BX043 | | 340 | 340 | 340 | 340 | 340 | 340 | 340 | 340 |
| | Optional components | DOS | | | | | | | | | 100 |
| | | TB6658 | 3 | 3 | 3 | 3 | 3 | 3 | 3 | 3 | 3 |
| | | KBM-403 | 17 | 17 | 17 | 17 | 17 | 17 | 17 | 17 | 17 |
| | | Kalfain 500 | 30 | 30 | 30 | 30 | 30 | 30 | 30 | 30 | 30 |
| | Total | | 1623 | 1963 | 1963 | 1963 | 1963 | 1963 | 1940 | 1863 | 1963 |
| | | | | | | | | | | | |
| | component (D) | SAX575 | 170 | 170 | 170 | 170 | 170 | 170 | | 170 | 170 |
| | component (E) | K-54 | 15 | 15 | 15 | 15 | 15 | 15 | 15 | 15 | 15 |
| | component (F) | AW35-125 | 1450 | 1450 | 1450 | 1450 | 1450 | 1450 | 1450 | 1450 | 1450 |
| | | AX3-32 | 100 | 100 | 100 | 100 | 100 | 100 | 100 | 100 | 100 |
| agent B | component (G) | BX043 | | 350 | 350 | 350 | 350 | 350 | 350 | 350 | 350 |
| | Optional components | DOS | 80 | 80 | 80 | 80 | 80 | 80 | 250 | 80 | 80 |
| | | KBM-903 | 3 | 3 | 3 | 3 | 3 | 3 | 3 | 3 | 3 |
| | | Kalfain 500 | 12 | 12 | 12 | 12 | 12 | 12 | 12 | 12 | 12 |
| | Total | | 1830 | 2180 | 2180 | 2180 | 2180 | 2180 | 2180 | 2180 | 2180 |

### <Production of a test piece>

The agent A and the agent B of the composition were put into a polyethylene container such that, as shown in Table 1, the component (E) accounted for 15 parts by mass relative to 100 parts by mass of the component (A), and mixing was performed using a wooden rod for 10 minutes in an environment of 25°C. Next, the composition after mixing was allowed to stand for 7 days in an environment of 25°C and 55%RH so that a sheet having a thickness of 2 mm would be obtained after curing, and was cured; thus, a sheet-like cured product was produced. The obtained sheet-like cured product was punched with a No. 3 dumbbell to produce a test piece, and marked lines with a distance of 20 mm therebetween were drawn on the test piece.

### <Measurement of tensile strength>

Both ends of the test piece produced above were fixed to a chuck such that the major axis of the test piece and the center of the chuck were in a straight line. The test piece was pulled at a tensile speed of 500 mm/min, and the maximum load was measured. The strength at the time of the maximum load is taken as the "tensile strength (MPa)". The results are shown in Table 2. The measurement was performed according to JIS K 6251 (2010). In the present invention, the tensile strength of the cured product is preferably in the range of 1.0 to 5.0 MPa from the viewpoint that properties regarding the occurrence of cracks of the resin due to vibration, impact, etc. and fixing of members are excellent.

### <Measurement of resin elongation percentage>

The test piece produced above was fixed to a chuck in the same manner as in the tensile strength test, and was pulled at a tensile speed of 500 mm/min until the test piece was cut. Based on the fact that, during the measurement, the test piece elongates and the distance between the marked lines widens, the distance between the marked lines was measured with vernier calipers until the test piece was cut. With the initial distance between the marked lines as a reference (0%), the percentage of elongation is taken as the "resin elongation percentage (%)". In the present invention, the elongation percentage of the cured product is preferably 150 or more from the viewpoint that properties regarding the occurrence of cracks of the resin due to vibration, impact, etc. are excellent. Resin elongation percentage (%) = ((the length of the marked line when the test piece is cut (mm)/the initial length of the marked line (mm)) - 1) × 100.

### <Measurement of thermal conductivity>

The agent A and the agent B of the composition were put into a polyethylene container such that, as shown in Table 1, the component (E) accounted for 15 parts by mass relative to 100 parts by mass of the component (A), and mixing was performed using a wooden rod for 10 minutes in an environment of 25°C. Next, the composition after mixing was allowed to stand for 7 days in an environment of 25°C and 55%RH so that a sheet having a thickness of 2 mm would be obtained after curing, and was cured; thus, a sheet-like cured product was produced. The measurement of thermal conductivity (W/ (m - k) was performed at 25°C using a thermal conductivity meter (QTM-500, manufactured by Kyoto Electronics Manufacturing Co., Ltd.). The thermal conductivity is preferably larger because heat is conducted more easily. In particular, in the present invention, the thermal conductivity of the cured product is preferably 1.5 W/(m·k) or more.

### <Flame retardancy test>

The agent A and the agent B of the composition shown in each of Examples 2 to 6 and Comparative Examples 1 to 3 shown in Table 1 were put into a polyethylene container such that the component (E) accounted for 15 parts by mass relative to 100 parts by mass of the component (A), and mixing was performed using a wooden rod for 10 minutes in an environment of 25°C. The mixture was allowed to stand for 7 days in an environment of 25°C and 55%RH, and was cured; thus, a test piece of 125 × 13 × 3.0 mm was produced. Using the obtained test piece, a vertical flame retardancy test was performed based on the UL94 V-0 standard, and evaluation was performed.

### [Evaluation criteria]

A test piece that passed UL94 V-0 was rated "o", and a non-conforming test piece was rated "×".

Specifically, a test piece satisfying all of the following items was rated "o", and a test piece not satisfying at least one of the following items was rated "×". Example 1 did not contain a flame retardant and was unmeasured, and is thus indicated by "-".
a) The duration of flaming combustion t1 or t2 of each of all specimen is 10 seconds or less.
b) The total duration of flaming combustion of each set based on all pieces of processing (t1's + t2's of 5 specimens) is 50 seconds or less.
c) The total duration of t2 + t3 is 30 seconds or less.
d) There is no flaming combustion or glowing combustion reaching up to the holding clamp of each sample.
e) There is no ignition of absorbent cotton due to falling objects.

t1 to t3 are as follows.
t1: Duration of flaming combustion after the first flame separation (seconds)
t2: Duration of flaming combustion after the second flame separation (seconds)
t3: Duration of glowing combustion after the second flame separation (seconds).

**[Table 2]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Tensile strength (MPa) | 3.0 | 2.9 | 2.8 | 3.0 | 2.8 | 2.9 | 0.006 | 3.4 | 30 |
| Resin elongation percentage (%) | 50 | 26 | 28 | 16 | 21 | 25 | < 1 | < 5 | < 10 |
| Thermal conductivity (W/(m·K)) | 1.8 | 2.1 | 2.1 | 2.1 | 2.2 | 2.1 | 2.2 | 2.2 | 2.1 |
| Flame retardancy | - | ○ | ○ | ○ | ○ | ○ | ○ | ○ | ○ |

Each of Examples 1 to 6 is a composition containing the component (A) to the component (F); further, each of Examples 2 to 6 is a composition containing aluminum hydroxide as a flame retardant. It has been found that the cured product of the composition of each of Examples 1 to 6 is excellent in tensile strength, resin elongation percentage, and thermal conductivity and the cured product of the composition of each of Examples 2 to 6, which contains a flame retardant, is excellent also in flame retardancy. On the other hand, it has been found that, in Comparative Example 1, which is an epoxy resin-based composition not containing the component (B) or the component (D), the tensile strength and the resin elongation percentage of the cured product are low. It has been found that, in both Comparative Example 2, which is a composition not containing the component (C), and Comparative Example 3, which is a composition in which the component (C) is replaced with DOS, which is a plasticizer, the resin elongation percentage of the cured product is less than 15%.

### Industrial Applicability

The two-part thermally conductive resin composition of the present invention can be cured at normal temperature, and the thermal conductivity and the resin elongation percentage of the cured product are excellent; thus, the two-part thermally conductive resin composition is very useful in various uses such as: heat dissipation of electronic substrates; heat dissipation of electronic devices such as mobile phones and personal computers; heat dissipation of illumination such as LEDs; heat dissipation of optical pickup modules; heat dissipation of camera modules; heat dissipation of sensing devices; heat dissipation of power semiconductors; heat dissipation of HEV, FCV, and EV inverters; heat dissipation of HEV, FCV, and EV converters; heat dissipation of battery packs, and HEV, FCV, and EV ECU components; and heat dissipation of automotive batteries, and is, by further containing a flame retardant, useful in uses in which nonflammability is required, such as automotive batteries.

The present application is based on Japanese Patent Application No. 2022-014358 filed on February 1, 2022, the disclosure of which is incorporated herein as a whole by reference.

## Claims

1. A two-part thermally conductive resin composition comprising a component (A) to a component (F) below:
component (A): an epoxy resin (excluding epoxy resins having a (meth)acrylic-based polymer skeleton);
component (B): a metal catalyst;
component (C): an acrylic-based polymer and/or a polyether polyol (excluding component (D));
component (D): a crosslinkable silyl-containing organic polymer;
component (E): an epoxy curing agent; and
component (F): a heat dissipating filler.

2. The two-part thermally conductive resin composition according to claim 1, composed of an agent A and an agent B, wherein the agent A is a composition containing the component (A) and the component (B), the agent B is a composition containing the component (D) and the component (E), and other components are contained in at least one of the agent A and the agent B.

3. The two-part thermally conductive resin composition according to claim 1, wherein the component (C) is in a liquid form.

4. The two-part thermally conductive resin composition according to claim 1, wherein the component (C) is contained in an amount of 20 to 250 parts by mass relative to 100 parts by mass of the component (A).

5. The two-part thermally conductive resin composition according to claim 1, further comprising a flame retardant as a component (G).

6. The two-part thermally conductive resin composition according to claim 5, wherein the component (G) is aluminum hydroxide.

7. The two-part thermally conductive resin composition according to claim 5, composed of an agent A and an agent B, wherein the agent A is a composition containing the component (A) to the component (C), the component (F), and the component (G), and the agent B is a composition containing the component (D) to the component (G).

8. A cured product obtained by curing the two-part thermally conductive resin composition according to any one of claims 1 to 7.

9. The cured product according to claim 8, wherein a thermal conductivity is 1.5 W/(m·k) or more, and flame retardancy satisfies UL94 V-0.

10. The cured product according to claim 8, wherein a resin elongation percentage is 15% or more.
